# EUROPEAN PATENT APPLICATION

(11) **EP 4 530 779 A1**
(43) Date of publication of application: **02.04.2025**
(21) Application number: 23199979.8
(22) Date of filing: 27.09.2023
(51) Int. Cl.: G05B 23/02

(54) **METHODS AND SYSTEMS FOR MONITORING OF INFRASTRUCTURE**

(71) Applicant: Siemens Schweiz AG, 8047 Zürich (CH)
(72) Inventor: Chinchole, Raviraj, 412307 Pune (IN); Hagenlueke, Peter, 8008 Zürich (CH); Orlando Miele, Riccardo, 8001 Zürich (CH); Sane, Siddesh, 411046 Pune (IN)
(74) Representative: Siemens Patent Attorneys

(57) **Abstract**

Method for configuring an overview widget for visualizing one or more key performance indicators associated with an infrastructure (40), wherein the infrastructure is associated with an automation system (90), wherein the automation system (90) comprises a plurality of subsystems (50, 60, 70, 80) adapted to monitor at least one parameter (52, 62, 72, 82) of the infrastructure (40) and/or the automation system (90);
the method comprising the method steps of:
- receiving a selection of locations (91, 92, 93, 94, 95, 96, 97, 98, 99) of the infrastructure (40);
- receiving a selection of said parameters (52, 62, 72, 82);
- receiving for each one of the selected parameters (52, 62, 72, 82) at least one threshold condition (53, 63, 73, 83);
- receiving time-related data points of the parameters (52, 62, 72, 82) for the selected locations (91, 92, 93, 94, 95, 96, 97, 98, 99) and the selected parameters (52, 62, 72, 82);
- automatically calculating key performance indicators (6) based on the threshold condition (53, 63, 73, 83) and the received data points for each one of the selected locations (91, 92, 93, 94, 95, 96, 97, 98, 99);
- generating the overview widget (4, 600) comprising for each of the selected locations (91, 92, 93, 94, 95, 96, 97, 98, 99) the key performance indicators (6) for each one of the selected parameters (52, 62, 72, 82).

## Description

The instant disclosure generally relates to the technical field of monitoring infrastructure, such as a building, a campus, a real estate portfolio and/or an automation system for automating said infrastructure, such as a building automation system.

Digitalization has become more relevant in the past years in infrastructure automation. Infrastructure automation encompasses a wide variety of systems, such as fire safety systems, Heating, Ventilation and Air Conditioning (HVAC), energy systems, intrusion protection, security or lighting systems. These systems can cover one or several sites, wherein a site can be for example a building, a factory, a plant, a hospital, or a campus.

In order to monitor, control, or access information of provided by an infrastructure automation system, presently an operator is required to individually create distinct key performance indicator (KPI) widgets and separate detailed data widgets for each specific location. This requires labour, and particularly for larger infrastructure automation systems, it can be tedious to effectively access the relevant information.

It is an object of the present disclosure to optimize operation of an infrastructure automation system.

This object is achieved by the solutions presented in the independent claims.

According to an aspect, a monitoring system for visualizing one or more key performance indicators is proposed. The one or more key performance indicators are associated with an infrastructure. The infrastructure is associated with an automation system. The automation system comprises a plurality of subsystems. The subsystems are adapted to monitor at least one parameter of the infrastructure and/or the automation system. The monitoring system comprises a widget configurator and an interface. The widget configurator is configured for receiving a selection of locators. Locations of the infrastructure are identified by the locators. The widget configurator is configured for receiving a selection of said parameters, and for each one of the selected parameters a threshold condition.

The interface is adapted for receiving time-related data points of the parameters originating from a plurality of sensors of the plurality of subsystems. The widget configurator is adapted for configuring an overview widget. The overview widget is configured for displaying for each one of the selected locations key performance indicators of the selected parameters. The key performance indicators depend on the threshold conditions of the respective parameters and the received data points. The overview widget is configured for displaying said key performance indicators.

According to an aspect, a method for configuring an overview widget is proposed. The overview widget is configured for visualizing one or more key performance indicators associated with an infrastructure. The infrastructure is associated with an automation system. The automation system comprises a plurality of subsystems adapted to monitor at least one parameter of the infrastructure and/or the automation system.

A selection of locations of the infrastructure and a selection of parameters is received. For each one of the selected parameters a threshold condition is received. Time-related data points of the parameters for the selected locations and the selected parameters are received. Key performance indicators are automatically calculated based on the threshold condition and the received data points for each one of the selected locations. An overview widget comprising for the selected locations the key performance indicators for each one of the selected parameters is automatically.

According to an aspect, a widget configurator for configuring an overview widget is proposed. The overview widget is associated with an automation system of an infrastructure. The automation system comprises a plurality of subsystems. Each one of the subsystems is adapted to monitor at least one parameter of the infrastructure and/or the automation system. The overview widget configurator is configured for receiving a selection of locators, said locators identifying locations of the infrastructure. The widget configurator is configured for receiving a selection of said parameters. The widget configurator is configured for receiving for each one of the selected parameters at least one threshold condition. The widget configurator is adapted for configuring an overview widget. Said overview widget is configured for receiving or generating for each one of the selected locations key performance indicators of the selected parameters. The key performance indicators depend on the threshold conditions and the received data points. Said overview widget is further configured for displaying said key performance indicators.

According to an aspect a computer program comprising instructions to cause the monitoring system and/or the widget configurator to execute the steps of the method is proposed.

More specific embodiments are presented in an exemplary manner in the independent claims, in the figures, and in the description.

According to an embodiment the overview widget comprises a time range selector for selecting a time range. The overview widget is configured to indicate the key performance indicators according to the selected time range. This allows an operator to more effectively monitor and/or control of the automation system.

According to an embodiment the overview widget is configured to provide a real-time alert or notification when a threshold condition is breached. This allows for a timelier response in case of a breach of a threshold condition.

According to an embodiment the overview widget is associated with a backend. The backend is configured for calculating the key performance indicators. The backend can be physically or logically integrated into the monitoring system or being remote or being an entity communicating with the overview widget and/or a core of the monitoring system.

According to an embodiment the automation system is a building automation system. Particularly for a building automation system which automates and/or monitors and/or controls several parameters for several locations this allows optimized operation.

According to further embodiments, the infrastructure is a building, a factory, a plant, a hospital, a campus, or a portfolio including a selection of geographically distributed buildings, factories, plants, hospitals or campuses.

According to an embodiment the overview widget is configured for causing the monitoring system or an associated backend system to calculate key performance indicators of the selected parameters based on their threshold conditions and the received data points for each one of the selected locations. This allows to save computing power, since only the key performance indicators that are selected need to be calculated. Other embodiments require that a larger number of key performance indicators are calculated and stored without causation of the overview widget. This requires calculating and storing a larger number of KPIs on stock, thus reducing flexibility in the selection of threshold conditions, but involves the advantage that the KPIs would be ready immediately when requested from a memory associated with the monitoring system.

Various features will become apparent to those skilled in the art from the following detailed description of the disclosed non-limiting embodiments. The drawings that accompany the detailed description can be briefly described as follows:
FIG 1 schematically depicts a block diagram of a building automation system comprising or being associated with a monitoring system according to an embodiment of the invention;
FIG 2 schematically depicts a block diagram of a building automation system comprising or being associated with a monitoring system and a widget configurator according to an embodiment of the invention;
Figures 3 to 7 show screen views illustrating a method for configuring a monitoring system and an overview widget of a building automation system according to an embodiment of the invention.

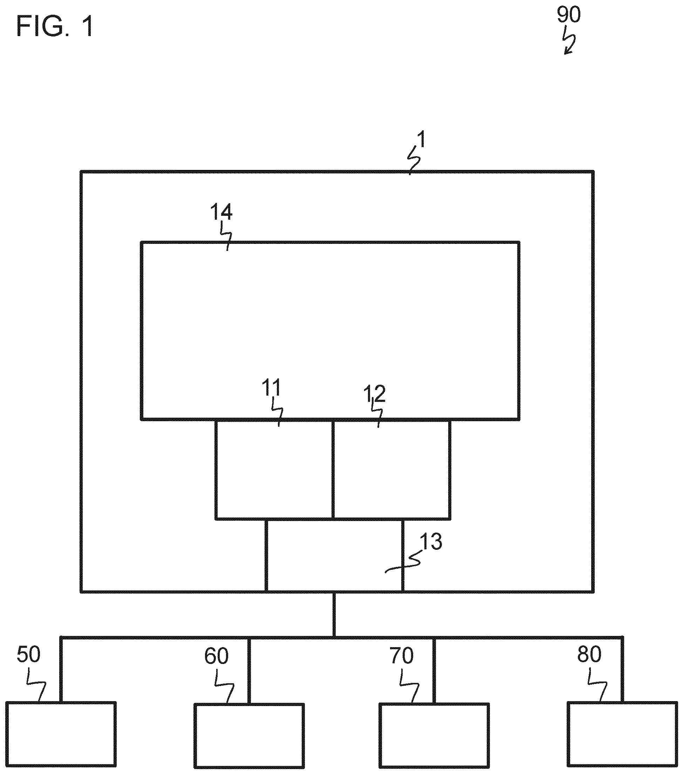

Figure 1 shows schematically a building automation system 90 comprising or being associated with a monitoring system 1 and a plurality of subsystems 50, 60, 70, 80. The monitoring system 1 is configured to monitor an infrastructure 40. The monitoring system 1 comprises or is associated with an accessible memory 11, a controller 12, an interface 13, and a user terminal 14. The user terminal 14 can comprise e.g. a keyboard, a computer mouse, and a monitor such that a user can access the monitoring system 1. The subsystems can for example comprise an HVAC system 50, an energy system 60, a security system 70, and a lighting system 80. The interface 13 connects the subsystems 50, 60, 70, 80, to the monitoring system 1.

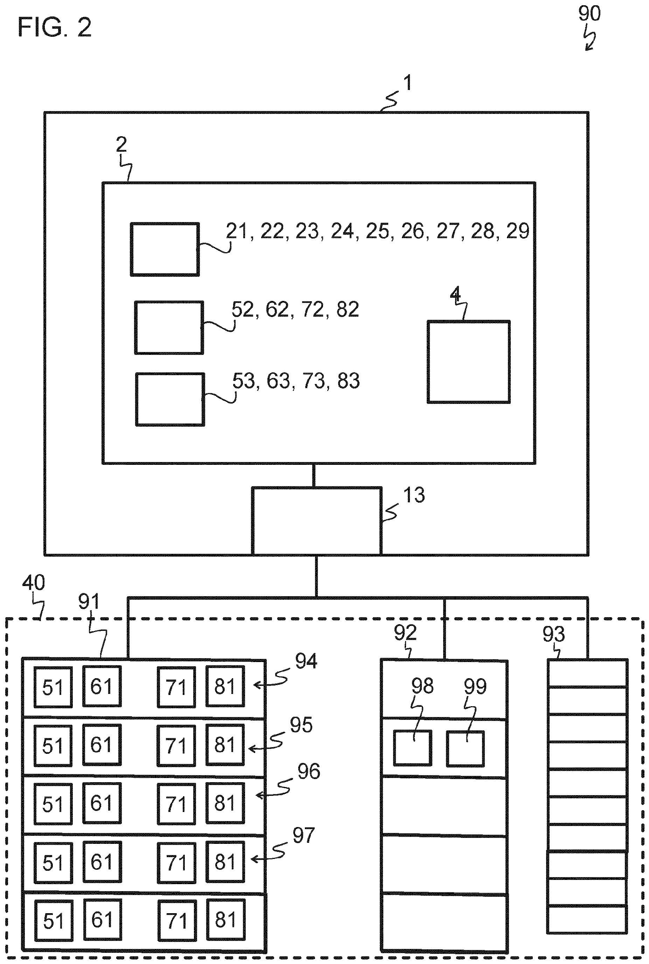

Figure 2 shows schematically the building automation system 1 of Figure 1 together with the infrastructure 40 which it automates. The infrastructure 40 comprises several buildings 91, 92, 93. The buildings 91, 92, 93 can be all be situated on one campus or geographically distributed, e.g. over a city, over a country, or over several countries. Each one of the buildings 91, 92, 93 comprises several areas, e.g. floors 94, 95, 96, 97 as shown in an exemplary manner for building 91 or rooms 98, 99, as shown in an exemplary manner for building 92.

Each one of the subsystems comprises sensors 51, 61, 71, 81 to monitor at least one parameter 52, 62, 72, 82 of the infrastructure 40 and/or of the building automation system 90. The sensors can for example be temperature sensors 51, pressure sensors 61, humidity sensors 71, or air change sensors 81, and be in any location 91, 92, 93, 94, 95, 96, 97, 98, 99 of the building infrastructure.

In Figure 2, the floors 94, 95, 96, 97, can also have several rooms, wherein each one of the rooms comprises a selection of sensors 51, 61, 71, 81, while of course the other buildings 92, 93 can have floors with distinct rooms, while a selection of sensors are placed in the rooms or floors or any other location according to the respective needs.

The monitoring system 1 comprises a widget configurator 2. The widget configurator 2 is configured for receiving a selection of locators 21, 22, 23, 24, 25, 26, 27, 28, 29 said locators locating locations 91, 92, 93, 94, 95, 96, 97, 98, 99 of the infrastructure 40. The widget configurator 2 is configured for receiving a selection of said parameters 52, 62, 72, 82, and for each one of the selected parameters 52, 62, 72, 82 a threshold condition 53, 63, 73, 83 via the terminal 14.

The monitoring system 1 receives via the interface 3 time-stamped data points of the parameters 52, 62, 72, 82 originating from the plurality of sensors 51, 61, 71, 81, and stores each of these datapoints in a database in the memory 11 by creating an entry comprising the locator, the time stamp, the parameter, and the value measured by the respective sensor. A data point comprises for example a temperature, humidity, pressure or air change rate measured by a sensor. The widget configurator 2 is adapted for configuring an overview widget 4 that causes the monitoring system 1 to calculate key performance indicators of the selected parameters 52, 62, 72, 82 based on their threshold conditions and the received data points for each one of the selected locations 91, 92, 93, 94, 95, 96, 97, 98, 99. The overview widget causes the displaying said key performance indicators on the user terminal 14.

According to an embodiment, the monitoring system 1 is a control system of the building automation system 40, capable of sending control signals to the subsystems 50, 60, 70, 80 in order to control actuators of these subsystems. In another embodiment, the monitoring system 1 is only configured for configuring the overview widget and/or for visualizing the one or more key performance indicators associated with an infrastructure 40, but not configured for controlling the automation system 90 and/or any of the subsystems 50, 60, 70, 80.

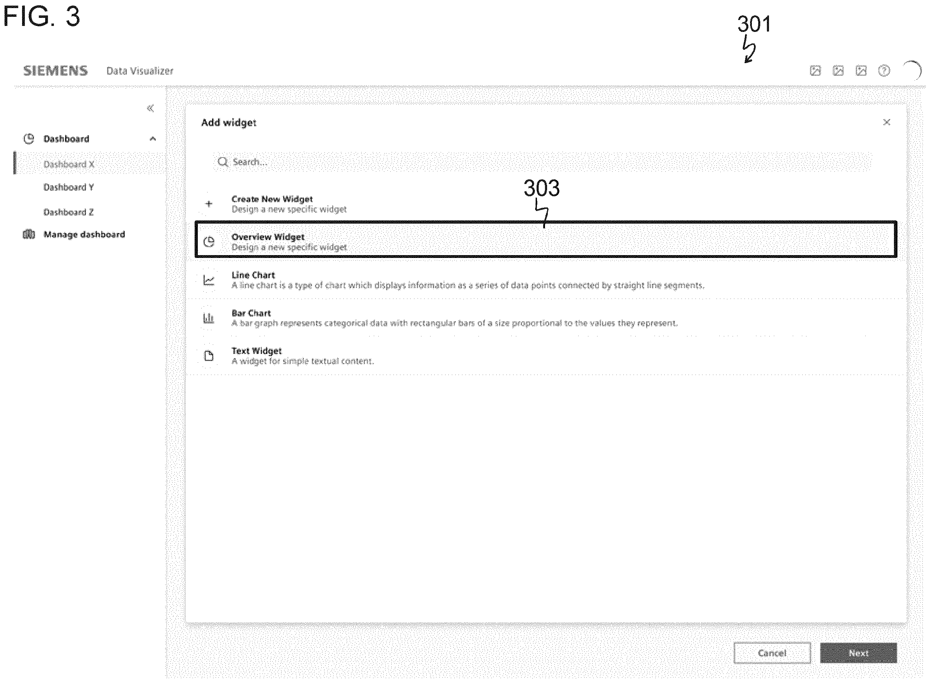

Figures 3 to 7 illustrate a method for configuring a monitoring system 1 and for configuring an overview widget of building automation system. The method can be executed on a monitoring system 1 as presented in Figures 1 and 2.

Figure 3 shows a data visualizer 301 with dashboard in which a selection 303 is chosen to design a new overview widget.

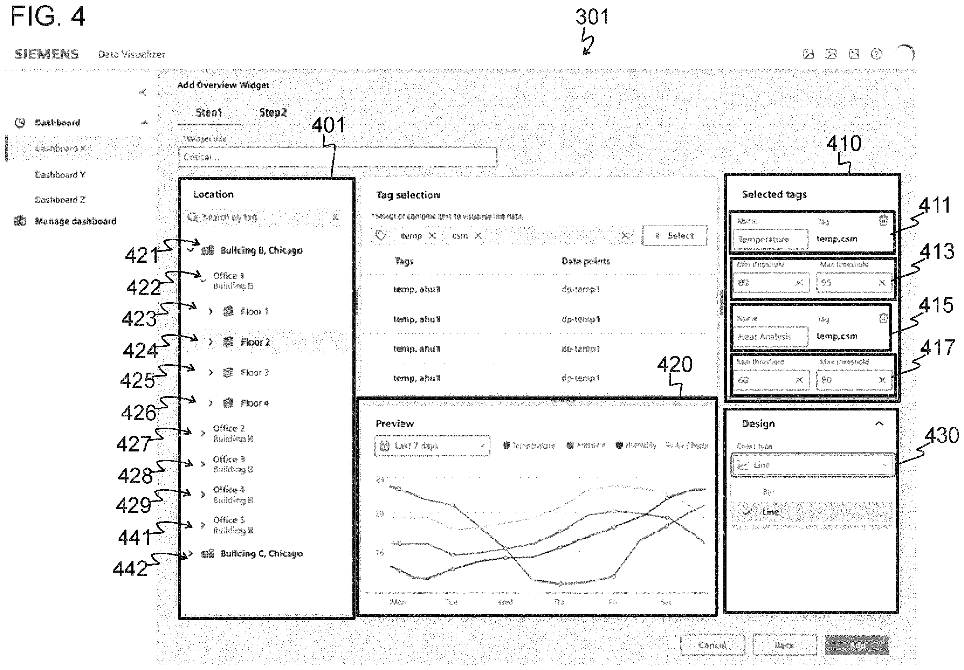

Figure 4 shows the data visualizer 301 in a next step, in which a location of the infrastructure system can be chosen by clicking onto locators 421, 422, 423, 424, 425, 426, 427, 428, 429, 441, 442 in a location selection frame 401.

In a parameter selection frame 410 parameters 411, 415 can be selected, together with their respective threshold conditions 413, 417.

In a preview frame 420, a diagram of a selection of parameters from a selected location can already be indicated over a given past time period, e.g. over the last 7 days. In a design frame 430, the design of the diagram can be chosen.

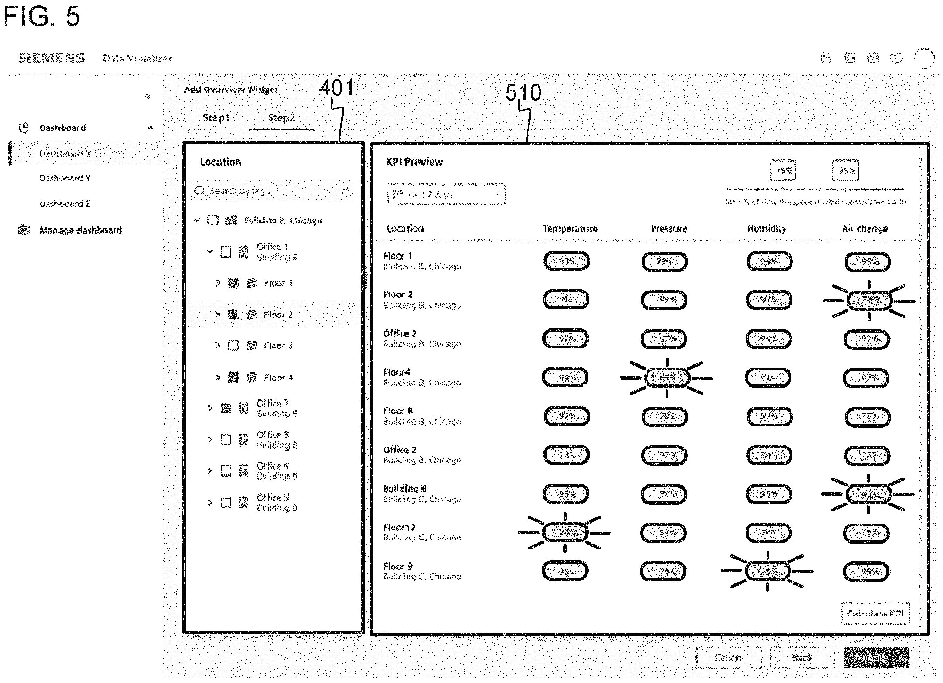

Figure 5 shows the data visualizer 301 in a next step, in which a selection of the locations of the infrastructure system can be finally chosen by clicking an option in a location selection frame 401. In this step, the visualizer also shows a KPI preview frame 510 in which in a matrix for all the selected locations (columns) and all of the selected parameters (rows) the calculated KPIs are indicated.

The calculation of the KPIs is performed by calculating the percentage of data points that were within of the threshold during a given time range in a backend of the monitoring system 1. To do so, the monitoring system 1 uses the entries that were previously stored in the database in the memory 11.

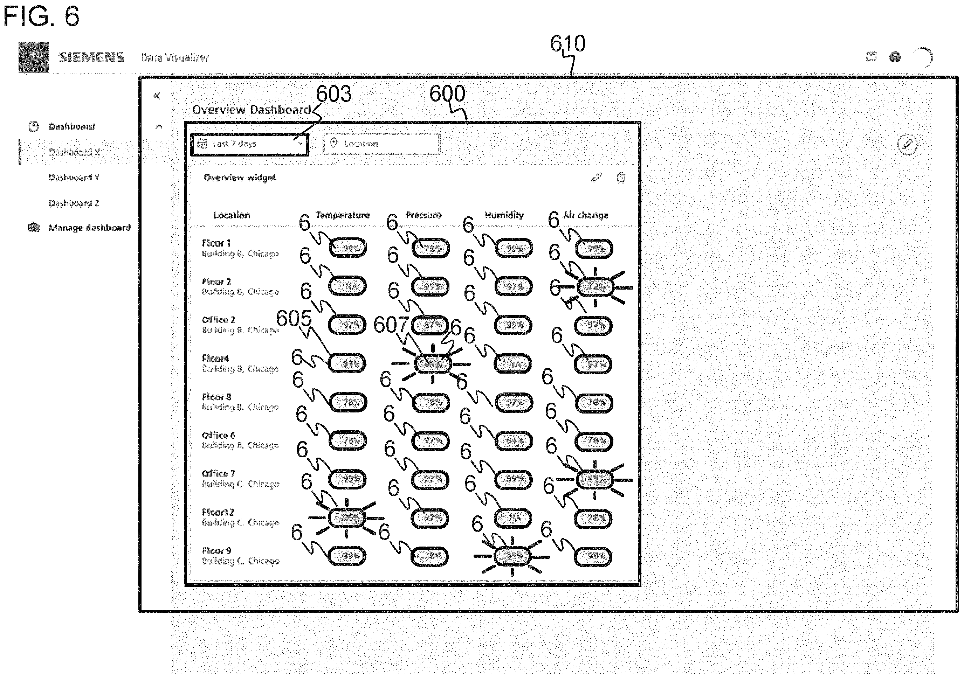

Figure 6 shows a dashboard 610 with the overview widget 600 showing for each one of the selected locations the key performance indicators 6 for each one of the selected parameters according to the selected threshold conditions. The KPIs 6 are presented in the form of a table wherein the rows of the table represent selected locations, while the columns represent the selected parameters.

The overview widget 600 comprises a time range selector 603 for selecting a time range. The overview widget 600 is configured to indicate the key performance indicators according to the selected time range.

The overview widget 600 is configured to provide a real-time alert or notification when a threshold condition is breached. This can for example be done by displaying all KPIs that fulfill their respective threshold condition in green color and/or without blinking (shown in an exemplary way for the KPI 605), while the KPIs that do not fulfil their respective threshold conditions are displayed in red color and/or blinking (shown in an exemplary way for the KPI 607).

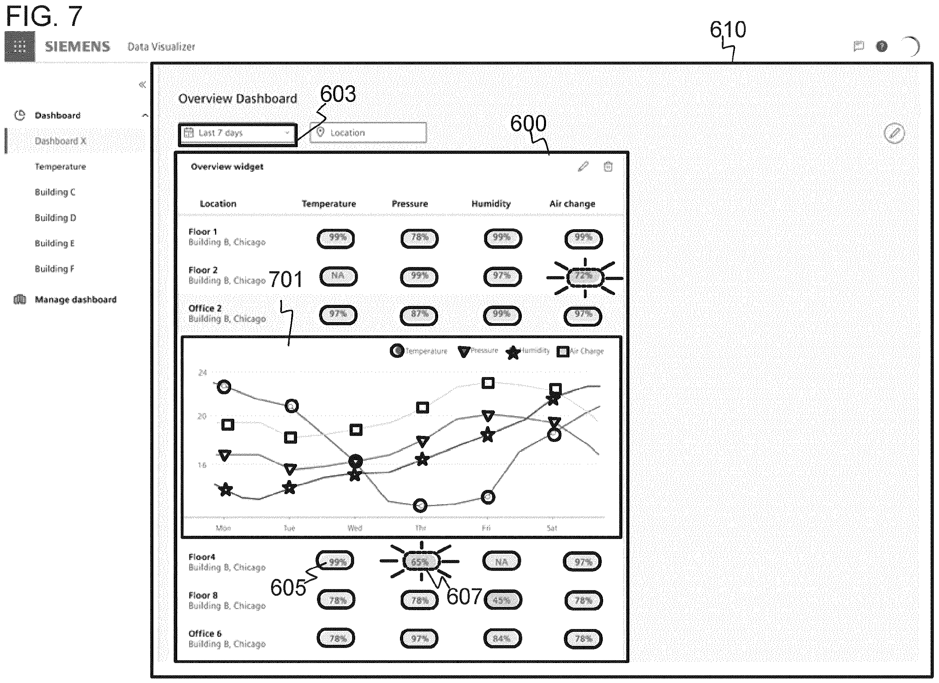

Figure 7 shows a dashboard 610 with the overview widget 600 when deep diving a specific value or location information. A location was selected, and a diagram 701 is opened in the dashboard representing the KPIs of a selected location over a time period that is selectable by a choice 603.

According to an embodiment of the invention an overview widget for threshold monitoring is provided.

According to embodiments of the invention, a comprehensive, unified interface that enables customers to effortlessly visualize Key Performance Indicators (KPIs) and detailed data in graphical format for identical zones or locations within a facility or other infrastructure is provided. To access this information, users are not anymore required to individually create distinct KPI widgets and separate detailed data widgets for each specific location.

According to embodiments of the invention, the overview widget represents a significant advancement in capabilities, empowering users to effectively address increasingly intricate user scenarios, for instance, a property owner seeking to enhance building management by monitoring numerous decentralized facilities across the globe. Embodiments of the invention comprise comprehensive, cross-domain intelligent visualizations capable of offering insights on sustainability, maintenance requirements, performance evaluation, and the dynamics influencing their offices.

Embodiments of the invention comprise delivering unparalleled speed, versatility, and operational autonomy when managing multiple locations, each with its unique complexities.

According to embodiments of the invention the overview widget comprises the option to establish a unified view for visualizing KPIs and detailed data (graphs) pertaining to identical zones/locations.

According to embodiments of the invention, the overview widget and/or the widget configurator comprises zone/location and data point selection and/or comprises a user-friendly interface for effortlessly selecting and highlighting specific data and locations of interest. This includes rooms, areas, floors, or even entire buildings.

According to embodiments of the invention, the overview widget comprises data and KPI visualization, enabling the presentation of data and KPIs related to all selected identical zones within a single interface. According to more specific embodiments, the overview widget provides real-time updates of the data and KPIs, along with date range selectors for retrieving historical data.

According to embodiments of the invention, the overview widget comprises critical space monitoring to elucidate the functionality of the overview widget.

According to embodiments of the invention, the overview widget is not or not solely confined to monitor critical space. It can be employed in various scenarios where similar data is distributed across multiple locations within a facility, such as monitoring energy consumption/production, space occupancy rates, comfort scores, sensor and device monitoring, or any other pertinent metrics.

According to embodiments of the invention the overview widget and/or the widget configurator is configured in such a manner that users can select multiple critical rooms from different locations within the facility.

According to an embodiment the widget configurator is configured such that the following workflow is followed to configure an overview widget:
1. Location Selection: Users can manually choose any combination of specified locations, including rooms, floors, and buildings from a provided list or tree structure.
2. Parameter Selection: Users select the relevant parameters for the data points or tags that identify data within the critical rooms.
3. Threshold Setting: Users define threshold values for each parameter.
4. Color Coding Selection: Users can assign color codes (e.g., green, yellow, red) or other visual features based on the threshold values for each selected datapoint.
5. Linking to Multiple Rooms: Users can link their selections to multiple rooms within the facility.

Output of the Overview/Threshold Monitoring Widgets:
According to an embodiment, the widget includes a time range selector, allowing users to choose a specific time period (e.g., last 24 hours, last 7 days, last calendar month).

According to an embodiment, the overview widget generates an overview chart displaying all the selected rooms/locations, along with Key Performance Indicators (KPIs) showing the percentage of threshold over- or undershooting during the selected time range for the respective data (chosen using tags). According to an embodiment, selection can be limited to a maximum, e.g. 20 locations.

According to an embodiment, the overview widget is configured that when a user clicks on any row element within the chart, whether it's a location or a KPI value, the corresponding dashboard will be opened (if it isn't already) and the global filter will be set to the location of the selected row.

According to an embodiment, the widget configurator is configured for allowing users to set both upper and lower limits (thresholds) for each selected data type (column) or parameter. According to an embodiment, threshold values are visualized not only on the overview but also on analyzer charts, alongside the data points.

According to an embodiment, KPIs are determined based on the threshold values and the number of data entries received within the specified time frame. For instance, to define a threshold for temperature data points, users specify low and high values and select a visualization time frame (e.g., last 24 hours). The KPI percentage is calculated as follows: [(number of entries within threshold / 24 entries) * 100].

According to embodiments of the invention, the overview widget comprises a comprehensive unified view of same facility spaces (critical rooms). The monitoring system comprises a singular, consolidated user interface 301, 610 that provides an all-encompassing perspective of identical spaces. By unifying the information into a single view, user experience is enhanced by eliminating the need to navigate multiple screens or systems. This increases simplicity in the user experience and reduces cognitive load, enabling users to quickly grasp the status of all critical rooms at a glance.

According to embodiments of the invention, the overview widget comprises a dynamic KPI selection for data types (future enhancement) . 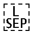 This allows flexibility in selecting Key Performance Indicators (KPIs) for different data types. This allows for increased personalization. Users can tailor their dashboard to display the specific metrics that are most relevant to their roles or objectives. This not only streamlines decision-making but also ensures that users are presented with data that directly contributes to their tasks, thereby enhancing their overall satisfaction with the system.

According to embodiments of the invention, the overview widget comprises threshold monitoring for health assessment. This allows for feedback and a robust threshold monitoring feature that assesses the health of critical rooms. By providing real-time alerts and notifications when thresholds are breached, users are kept informed about potential issues promptly. This immediate feedback ensures that users can take proactive measures to maintain the optimal conditions in critical rooms, improving efficiency and minimizing downtime. This feature also fosters a sense of control and confidence among users, contributing to a positive user experience.

According to embodiments of the invention, the overview widget comprises for each of the selected locations the key performance indicators for each one of the selected parameters is generated by the monitoring system.

It should be understood that the foregoing relates only to certain embodiments of the invention and that numerous changes may be made therein without departing the scope of the invention as defined by the following claims. It should also be understood that the invention is not restricted to the illustrated embodiments and that various modifications can be made within the scope of the following claims.

## Claims

1. Monitoring system (1) for visualizing one or more key performance indicators associated with an infrastructure (40), wherein the infrastructure is associated with an automation system (90), said automation system (90) comprising a plurality of subsystems (50, 60, 70, 80) adapted to monitor at least one parameter (52, 62, 72, 82) of the infrastructure (40) and/or the automation system (90);
the monitoring system (1) comprising a widget configurator (2), and an interface (3);
wherein the widget configurator (2) is configured for receiving a selection of locators (21, 22, 23, 24, 25, 26, 27, 28, 29), said locators identifying locations (91, 92, 93, 94, 95, 96, 97, 98, 99) of the infrastructure (40) ;
wherein the widget configurator (2) is configured for receiving a selection of said parameters (52, 62, 72, 82) ;
wherein the widget configurator (2) is configured for receiving for each one of the selected parameters (52, 62, 72, 82) at least one threshold condition (53, 63, 73, 83);
wherein the interface (3) is adapted for receiving time-related data points of the parameters (52, 62, 72, 82) originating from a plurality of sensors (51, 61, 71, 81) of the plurality of subsystems (50, 60, 70, 80); wherein the widget configurator (2) is adapted for configuring an overview widget (4, 600);
said overview widget (4, 600) being configured for displaying for each one of the selected locations (91, 92, 93, 94, 95, 96, 97, 98, 99) key performance indicators (6) of the selected parameters (52, 62, 72, 82) depending on the threshold conditions and the received data points.

2. The monitoring system (1) of claim 1, wherein the overview widget (4, 600) comprises a time range selector for selecting a time range, and wherein the overview widget (4, 600) is configured to indicate the key performance indicators (6) according to the selected time range.

3. The monitoring system (1) of any one of the preceding claims, wherein the overview widget (4, 600) is configured to provide a real-time alert or notification when a threshold condition (53, 63, 73, 83) is breached.

4. The monitoring system (1) of any one of the preceding claims, comprising or being configured to access a backend for calculating for each one of the selected locations (91, 92, 93, 94, 95, 96, 97, 98, 99) the key performance indicators (6) of the selected parameters (52, 62, 72, 82) depending on the threshold conditions (53, 63, 73, 83) and the received data points.

5. The monitoring system (1) of any one of the preceding claims, wherein the automation system (90) is a building automation system.

6. Method for configuring an overview widget for visualizing one or more key performance indicators associated with an infrastructure (40), wherein the infrastructure is associated with an automation system (90), wherein the automation system (90) comprises a plurality of subsystems (50, 60, 70, 80) adapted to monitor at least one parameter (52, 62, 72, 82) of the infrastructure (40) and/or the automation system (90);
the method comprising the method steps of:
- receiving a selection of locations (91, 92, 93, 94, 95, 96, 97, 98, 99) of the infrastructure (40);
- receiving a selection of said parameters (52, 62, 72, 82) ;
- receiving for each one of the selected parameters (52, 62, 72, 82) at least one threshold condition (53, 63, 73, 83) ;
- receiving time-related data points of the parameters (52, 62, 72, 82) for the selected locations (91, 92, 93, 94, 95, 96, 97, 98, 99) and the selected parameters (52, 62, 72, 82);
- automatically calculating key performance indicators (6) based on the threshold condition (53, 63, 73, 83) and the received data points for each one of the selected locations (91, 92, 93, 94, 95, 96, 97, 98, 99) ;
- generating the overview widget (4, 600) comprising for each of the selected locations (91, 92, 93, 94, 95, 96, 97, 98, 99) the key performance indicators (6) for each one of the selected parameters (52, 62, 72, 82).

7. The method of claim 6, comprising the method step of receiving by the monitoring system (1) a time range selection via a time range selector of the overview widget (4, 600), and adapting the view of the overview widget (4, 600) according to the selected time range selection.

8. The method of any of claims 6 or 7, wherein the overview widget (4, 600) provides a real-time alert or notification when a threshold condition (53, 63, 73, 83) is breached.

9. The method of any of claims 6 to 8, wherein the key performance indicators (6) are calculated by a backend of the monitoring system (1).

10. The method of any of claims 6 to 9, wherein the automation system (90) is a building automation system.

11. Widget configurator (2) for configuring an overview widget (4, 600) associated with an automation system (90) of an infrastructure (40), wherein the automation system (90) comprises a plurality of subsystems (50, 60, 70, 80) adapted to monitor at least one parameter (52, 62, 72, 82) of the infrastructure (40) and/or the automation system (90);
wherein the widget configurator (2) is configured for receiving a selection of locators (21, 22, 23, 24, 25, 26, 27, 28, 29), said locators identifying locations (91, 92, 93, 94, 95, 96, 97, 98, 99) of the infrastructure (40) ;
wherein the widget configurator (2) is configured for receiving a selection of said parameters (52, 62, 72, 82) ;
wherein the widget configurator (2) is configured for receiving for each one of the selected parameters (52, 62, 72, 82) at least one threshold condition (53, 63, 73, 83);
wherein the widget configurator (2) is adapted for configuring an overview widget (4, 600);
said overview widget (4, 600) being configured for receiving or generating for each one of the selected locations (91, 92, 93, 94, 95, 96, 97, 98, 99) key performance indicators (6) of the selected parameters (52, 62, 72, 82) depending on the threshold conditions (53, 63, 73, 83) and the received data points;
said overview widget (4, 600) further being configured for displaying said key performance indicators (6).

12. The widget configurator (2) of claim 11, wherein the overview widget (4, 600) comprises a time range selector for selecting a time range, and wherein the overview widget (4, 600) is configured to indicate the key performance indicators (6) according to the selected time range.

13. The widget configurator (2) of claim 11 or 12,
wherein the overview widget (4, 600) is configured to provide a real-time alert or notification when a threshold condition (53, 63, 73, 83) is breached.

14. The widget configurator (2) of any of claims 11 to 13, wherein the widget configurator (2) and/or the overview widget (4, 600) is configured to cause a monitoring system (1) or a backend associated with the automation system (90) to calculate key performance indicators (6) of the selected parameters (52, 62, 72, 82) based on their threshold conditions (53, 63, 73, 83) and the received data points for each one of the selected locations (91, 92, 93, 94, 95, 96, 97, 98, 99).

15. A computer program comprising instructions to cause the monitoring system (1) of any one of claim 1 to 5 and/or the widget configurator (2) of any of the claims 11 to 14 to execute the steps of the method of any of the claims 6 to 10.
